# EUROPÄISCHE PATENTSCHRIFT

(11) **EP 0 811 785 B1**
(45) Veröffentlichungstag und Bekanntmachung des Hinweises auf die Patenterteilung: **17.10.2001**
(21) Anmeldenummer: 97102613.3
(22) Anmeldetag: 19.02.1997
(51) Int. Cl.: F16F 13/14

(54) **Hydraulisch dämpfende Hülsengummifeder**
Hydraulically-damped bushing
Manchon à amortissement hydraulique

(30) Priorität: 04.06.1996 DE 19622248
(43) Veröffentlichungstag der Anmeldung: 10.12.1997
(73) Patentinhaber: Firma Carl Freudenberg, 69469 Weinheim (DE)
(72) Erfinder: Rudolf, Hans-Joachim, 26935 Stadland (DE); Simuttis, Arnold, Dr., 55545 Bad-Kreuznach (DE); Rudolph, Axel, 64625 Bensheim (DE)

(56) Entgegenhaltungen:
- EP-A- 0 411 997
- DE-C- 4 242 080
- GB-A- 2 291 691
- US-A- 4 884 789
- PATENT ABSTRACTS OF JAPAN vol. 013, no. 265 (M-839), 19. Juni 1989 (1989-06-19) & JP 01 065344 A (BRIDGESTONE CORP;OTHERS: 01), 10. März 1989 (1989-03-10)
- DATABASE WPI Section PQ, Week 199607 Derwent Publications Ltd., London, GB; Class Q13, AN 1996-061156 XP002122168 & JP 07 317832 A (NISSAN MOTOR CO LTD), 8. Dezember 1995 (1995-12-08)

## Beschreibung

### Technisches Gebiet

Die Erfindung betrifft eine hydraulisch dämpfende Hülsengummifeder mit einem inneren Stützkörper, der von einem äußeren Stützkörper mit radialem Abstand umschlossen ist, wobei in dem durch den Abstand gebildeten Spalt ein Federkörper aus elastomerem Werkstoff angeordnete ist, wobei der äußere Stützkörper und der Federkörper zumindest eine Arbeitskammer begrenzen, die durch zumindest einen Dämpfungskanal flüssigkeitsleitend mit zumindest einer ersten Ausgleichskammer verbunden ist.

### Stand der Technik

Eine solche Hülsengummifeder ist aus der DE 38 20 805 A1 bekannt. Die Hülsengummifeder ist zur Lagerung eines Motors eines Kraftfahrzeuges an einer Kraftfahrzeugkasrosserie vorgesehen. Zwischen dem inneren Stützkörper und dem äußeren Stützkörper ist der Federkörper angeordnet, wobei der Federkörper oberhalb der Belastungseinleitung auf den inneren Stützkörper einen Hohlraum aufweist, sowie in Richtung der Belastungseinleitung die Arbeitskammer und die Ausgleichskammer, die durch den Dämpfungskanal miteinander verbunden sind. Der Dämpfungskanal ist ein Bestandteil einer Trennwand, die die Arbeitskammer von der ersten Ausgleichskammer trennt, wobei innerhalb der Trennwand eine Ausnehmung vorgesehen ist und innerhalb der Ausnehmung zur Isolierung höherfrequenter, kleinampliltudiger Schwingungen eine Schwingungsplatte in Richtung der eingeleiteten Schwingungen hin- und herbeweglich angeordnet ist. Die vorbekannte Hülsengummifeder besteht aus einer Vielzahl von Einzelteilen, was in wirtschaftlicher und fertigungstechnischer Hinsicht wenig zufriedenstellend ist.

Der Erfindung liegt die Aufgabe zugrunde, eine Hülsengummifeder der eingangs genannten Art derart weiterzuentwickeln, daß sich ein wesentlich vereinfachter Aufbau und bessere Gebrauchseigenschaften bezüglich der Isolierung/Dämpfung von Schwingungen ergeben und daß das Lager eine Absenkung der dynamischen Federrate in zumindest zwei Frequenzbereichen bewirkt. Außerdem soll die Hülsengummifeder durch einfache konstruktive Änderungen an die jeweiligen Gegebenheiten des Anwendungsfalles einfach anzupassen sein.

Diese Aufgabe wird erfindungsgemäß durch die Merkmale von Anspruch 1 gelöst. Auf vorteilhafte Ausgestaltungen nehmen die Unteransprüche Bezug.

Zur Lösung der Aufgabe ist es vorgesehen, daß die erste Ausgleichskammer im Querschnitt betrachtet durch den äußeren Stützkörper und eine gummielastische Blähwand begrenzt ist und daß in der ersten Ausgleichskammer zumindest eine zweite Ausgleichskammer angeordnet ist, die durch einen dämpfwirksamen Verbindungskanal mit der Arbeitskammer verbunden ist. Hierbei ist von Vorteil, daß die Hülsengummifeder einen einfachen, teilearmen Aufbau aufweist und dadurch in fertigungstechnischer und wirtschaftlicher Hinsicht einfach und kostengünstig herstellbar ist. Die gesamte Hülsengummifeder besteht aus nur zwei miteinander zu montierenden Teilen, wobei das zweite Teil durch den inneren Stützkörpers und den mit dem inneren Stützkörper verbundenen Federkörper gebildet ist, wobei die aus dem Federkörper und dem inneren Stützkörper bestehende Einheit mit dem äußeren Stützkörper, der das erste Teil bildet, montiert wird.

Bei Einleitung tieffrequenter, großamplitudiger Schwingungen in die Hülsengummifeder wird der innere Stützkörper, bezogen auf den äußeren Stützkörper derart radial verlagert, daß durch eine Volumenverkleinerung der Arbeitskammer ein Teil der in der Arbeitskammer enthaltenen Flüssigkeit durch den Dämpfungskanal in die erste Ausgleichskammer gefördert wird. In der ersten Ausgleichskammer wird das aus der Arbeitskammer verdrängte Flüssigkeitsvolumen aufgenommen und bei einer Rückkehr der beiden Stützkörper in ihre Ausgangslage relativ zueinander wieder in die Arbeitskammer abgegeben. Eine Abstimmung der Hülsengummifeder auf tieffrequente, großamplitudige Schwingungen kann durch Variationen der Länge und/oder des Querschnitts des Dämpfungskanals vorgenommen werden.

Zur Isolierung höherfrequenter kleinamplitudiger Schwingungen erfolgt demgegenüber keine Flüssigkeitsverlagerung von der Arbeitskammer durch den Dämpfungskanal in die Ausgleichskammern sondern nur eine Schwingungsanregung der in der zweiten Ausgleichskammer enthaltenen Flüssigkeitsbestandteile, die durch einen Verbindungskanal mit der Arbeitskammer verbunden ist.

Im Bereich tieffrequenter Schwingungen erfolgt eine Absenkung der dynamischen Federrate bei Flüssigkeitsverlagerungen von der Arbeitskammer durch den Dämpfungskanal in die erste Ausgleichskammer. Eine zweite Absenkung der dynamischen Federrate in einem vergleichsweise höherfrequenten Bereich erfolgt durch die Schwingungsanregung der Flüssigkeitsbestandteile innerhalb der zweiten Ausgleichskammer. Die dritte Absenkung der dynamischen Federrate bei einer Frequenz, die noch höher ist, als die Frequenzen im Bereich der ersten und zweiten Absenkung, erfolgt durch die Anregung von Flüssigkeitsbestandteilen in den zwei Teilkammern der ersten Ausgleichskammer.

Die zweite Ausgleichskammer kann einen im wesentlichen nierenförmigen Querschnitt aufweisen und sich in Umfangsrichtung der Hülsengummifeder erstrecken und allseitig durch membranartige Begrenzungswände aus gummielastischem Werkstoff begrenzt sein, wobei die Begrenzungswände dem äußeren Stützkörper und der Blähwand jeweils mit radialem Abstand benachbart zugeordnet sind. Der radiale Abstand, mit dem die Begrenzungswände dem äußeren Stützkörper und der Blähwand zugeordnet sind, ist derart bemessen, daß sich bei Einleitung tieffrequenter, großamplitudiger Schwingungen eine Aufblähung der zweiten Ausgleichskammer ergibt. Die zweite Ausgleichskammer kann zum Beispiel so lange aufgebläht werden, bis sich die Begrenzungswände in radialer Richtung außenseitig am äußeren Stützkörper und in radialer Richtung innenseitig an der Blähwand der ersten Ausgleichskammer abstützen. Durch diese Ausgestaltung wird bewirkt, daß gebrauchsdauerverringernde unerwünschte Zug-/Schubspannungen innerhalb der Begrenzungswände zuverlässig ausgeschlossen sind. Die Begrenzungswände können beispielsweise mit einer Armierung versehen sein, wobei die Armierung auf der der ersten Ausgleichskammer zugewandten Seite der Begrenzungswände, innerhalb der Begrenzungswände oder innerhalb der zweiten Ausgleichskammer angeordnet sein kann.

Die zweite Ausgleichskammer ist bevorzugt in axialer Richtung taschenförmig ausgebildet und erstreckt sich parallel zur Längsachse der Hülsengummifeder in die erste Ausgleichskammer. Die Erstreckung der zweiten Ausgleichskammer in axialer Richtung kann den jeweiligen Gegebenheiten des Anwendungsfalles problemlos angepaßt werden. Ist beispielsweise ein möglichst großes Volumen der zweiten Ausgleichskammer gewünscht und darf ihre Erstreckung in Umfangsrichtung eine vergleichsweise geringe Ausdehnung nicht überschreiten, besteht die Möglichkeit, daß sich die zweite Ausgleichskammer in axialer Richtung über nahezu die gesamte axiale Breite der Hülsengummifeder erstreckt. Die Begrenzungswände der zweiten Ausgleichskammer sind vollständig von der Dämpfungsflüssigkeit, die sich in der ersten Ausgleichskammer befindet, umschlossen.

Der Federkörper, die Blähwand und die Begrenzungswand können einstückig ineinander übergehend und materialeinheitlich ausgebildet sein. Die Handhabung der Einzelteile zur Montage der Hülsengummifeder ist dadurch besonders einfach. Außerdem ist eine separate Abdichtung der jeweils aus elastomerem Werkstoff bestehenden Teile gegeneinander entbehrlich. Auch während einer langen Gebrauchsdauer ist eine sichere Abdichtung der Arbeitskammer und der beiden Ausgleichskammern in Richtung der Umgebung gewährleistet.

Um eine verbesserte Abstimmung auf den jeweiligen Anwendungsfall zu erreichen, können drei zweite Ausgleichskammern innerhalb der ersten Ausgleichskammer gleichmäßig in Umfangsrichtung verteilt angeordnet sein. Die zweiten Ausgleichskammern sind bevorzugt mit Begrenzungswänden voneinander abweichender Blähelastizität ausgebildet und/oder weisen voneinander abweichende Volumina auf. Der etwas komplizierteren Ausgestaltung der Hülsengummifeder stehen weiter verbesserte Gebrauchseigenschaften bezüglich der optimalen Anpassung der Gebrauchseigenschaften an den jeweiligen Anwendungsfall gegenüber. Durch die erhöhte Anzahl der zweiten Ausgleichskammern können zusätzlich zu den zumindest zwei Absenkungen der dynamischen Federrate, die ohnehin gefordert sind, weitere Absenkungen der dynamischen Federrate in anderen Frequenzbereichen erzielt werden.

Im Rahmen der vorliegenden Erfindung bildet jedoch die ursprünglich beschriebene Ausgestaltung mit nur einer zweiten Ausgleichskammer einen ausgezeichneten Kompromiß zwischen einfachstem Aufbau der Hülsengummifeder und ausgezeichneter Wirkung zur Isolierung/Dämpfung eingeleiteter Schwingungen und erhält dadurch für die meisten Anwendungsfälle den Vorzug.

Die erste Ausgleichskammer kann aus zumindest zwei Teilkammern bestehen, die durch eine Drosselöffnung flüssigkeitsleitend verbunden sind. Die Drosselöffnung erstreckt sich bevorzugt innerhalb der ersten Ausgleichskammer in Umfangsrichtung, wobei der Dämpfungskanal bevorzugt in der Teilkammer der ersten Ausgleichskammer mündet, in der zumindest eine zweite Ausgleichskammer angeordnet ist. Durch die Flüssigkeitsverlagerung zwischen den beiden Teilkammern der ersten Ausgleichskammer durch die Drosselöffnung wird eine weitere, d. h. dritte Absenkung der dynamischen Federrate bewirkt. Die Drosselöffnung kann beispielsweise durch die Innenumfangsfläche des äußeren Stützkörpers und die partielle Verdickung der Blähwand nur im Bereich der Drosselöffnung begrenzt sein. In Abhängigkeit vom Öffnungsquerschnitt der Drosselöffnung und/oder seiner Länge kann Einfluß auf das Dämpfungsverhalten der Hülsengummifeder genommen werden.

Die Ausgleichskammer weist einen im wesentlichen trapezförmigen Querschnitt auf. Durch den trapezförmigen Querschnitt der Arbeitskammer weist die erste Ausgleichskammer in Umfangsrichtung der Hülsengummifeder betrachtet eine vergleichsweise große Ausdehnung auf, so daß bedarfsweise mehrere zweite Ausgleichskammern vorgesehen werden können und/oder mehrere Teilkammern, die durch Drosselöffnungen miteinander verbunden sind.

Gemäß einer vorteilhaften Ausgestaltung kann der innere Stützkörper umfangsseitig vom Federkörper vollständig umschlossen sein. Hierbei ist von Vorteil, daß es keiner zusätzlichen Rostschutz-Maßnahmen für den inneren Stützkörper bedarf. Außerdem ist durch die Ummantelung des inneren Stützkörpers durch den Federkörper eine ausgezeichnete Verbindung der beiden Teile miteinander bedingt.

Der innere Stützkörper weist bevorzugt einen im wesentlichen trapezförmigen Querschnitt auf, derart, daß die Stützstege des Federkörpers die Umfangsfläche des inneren Stützkörpers in einem Winkel von 45 bis 90° berühren. Bevorzugt beträgt der Winkel 60 bis 80°. Es sollte sichergestellt sein, daß der Winkel in jedem Fall kleiner als 90° ist. Dadurch wird bei Einleitung von Schwingungen in die Hülsengummifeder und relativer radialer Verlagerung der beiden Stützkörper zueinander sichergestellt, daß innerhalb der beiden Stützstege stets eine Druckvorspannung herrscht. Gebrauchsdauerverringende Zugspannungen innerhalb des aus einem elastomeren Werkstoff bestehenden Federkörpers sind dadurch ausgeschlossen.

Der innere Stützkörper kann auf der der Arbeitskammer abgewandten Seite einen einstückig mit dem Federkörper ausgebildeten Anschlagpuffer aufweisen. Dadurch wird verhindert, daß bei extremen Auslenkbewegungen des inneren Stützkörpers bezogen auf den äußeren Stützkörper schädliche Zugspannungen innerhalb der Stützstege auftreten. Im Querschnitt betrachtet sind die beiden Stützstege, der dazwischen angeordnete innere Stützkörper sowie der auf der den Stützstegen abgewandten Seite des inneren Stützkörpers angeordnete Anschlagpuffer insgesamt dachförmig gestaltet. Der teilearme Aufbau der Hülsengummifeder wird durch den Anschlagpuffer nicht nachteilig beeinflußt, da dieser einstückig mit dem Federkörper und dadurch auch einstückig mit der Blähwand der ersten Ausgleichskammer und den Begrenzungswänden der zweiten Ausgleichskammer verbunden ist.

Der innere Stützkörper kann stirnseitig zumindest einerseits in axialer Richtung eine offene Verdrehsicherungen aufweisen. Bevorzugt gelange in axialer Richtung beiderseits Verdrehsicherungen zur Anwendung. Die Verdrehsicherungen sind bevorzugt als Sackloch-Bohrungen ausgebildet und dienen dazu, daß beim Befestigen des inneren Stützkörpers an einem passenden Gegenstück eine lagerichtige Montage sichergestellt ist.

Die Verdrehsicherungen sind bevorzugt in sich radial in Richtung der Arbeitskammer erstreckenden Radialvorsprüngen angeordnet, wobei in axialer Richtung zwischen den Radialvorsprüngen eine sich parallel zur Längsachse der Hülsengummifeder erstreckende Ausnehmung vorgesehen ist. Hierbei ist von Vorteil, daß durch die Ausnehmung im inneren Stützkörper und dadurch, daß die Ausnehmung mit elastomerem Werkstoff des Federkörpers ausgefüllt ist, die radial Nachgiebigkeit des inneren Stützkörpers bezogen auf den äußeren Stützkörper, quer zur Hauptrichtung der eingeleiteten Schwingungen vergrößert ist. Die vorgesehenen Verdrehsicherungen beeinflussen die Gebrauchseigenschaften der Hülsengummifeder nur vernachlässigbar gering, obwohl sich durch die Verdrehsicherungen eine deutliche Vereinfachung bei der Montage der Hülsengummifeder ergibt.

Durch eine Erhöhung des inneren Stützkörpers an Stelle der Ausnehmung kann die axiale/radiale Steifigkeit in den Nebenrichtungen erhöht werden, falls dies für eine Anwendung erforderlich ist.

Der Federkörper und ein Fensterrohr aus zähhartem, bevorzugt metallischen Werkstoff, bilden eine Einheit und sind durch Vulkanisation miteinander verbunden. Das Fensterrohr, das vom elastomeren Werkstoff des Federkörpers nahezu vollständig umschlossen ist, bewirkt dadurch, daß die Einheit mit elastischer Vorspannung innerhalb des äußeren Stützkörpers angeordnet ist, eine zuverlässige Abdichtung gegenüber der Umgebung der Hülsengummifeder.

Zur Montage der beanspruchten Hülsengummifeder wird zunächst der äußere Stützkörper im Bereich einer seiner beiden Stirnseiten derart umgebördelt, daß der umgebördelte erste Teil einen Anschlag für das einzuschiebene zweite Teil bildet. Das zweite Teil besteht aus dem vom elastomeren Werkstoff des Federkörpers umfangsseitig ummantelten inneren Stützkörper und dem Fensterrohr, das ebenfalls vom elastomeren Werkstoff des Federkörpers umschlossen ist sowie den Blähwänden der ersten Ausgleichskammer und den Begrenzungswänden der zweiten Ausgleichskammer, die einstückig mit dem Federkörper ausgebildet sind. Nach dem das zweite Teil in einem mit Dämpfungsflüssigkeit gefüllten Fluidbad in das erste Teil, das durch den äuβeren Stützkörper gebildet ist, eingeführt ist, wird die zweite Stirnseite des äußeren Stützkörpers umgebördelt, so die beiden Teile, aus denen die Hülsengummifeder besteht, unverlierbar und flüssigkeitsdicht miteinander verbunden sind. Durch die Zusammenfügung der beiden Teile unter Fluid wird sichergestellt, daß sich innerhalb der Hülsengummifeder kein Luftpolster bildet.

Ein Ausführungsbeispiel der erfindungsgemäßen Hülsengummifeder wird nachfolgend anhand der beigefügten Zeichnungen weiter erläutert. Diese zeigen in schematischer Darstellung:

### Kurzbeschreibung der Zeichnung

- Fig. 1: eine Ansicht einer Hülsengummifeder ohne äußeren Stützkörper;
- Fig. 2: den Schnitt A-A durch die Hülsengummifeder aus Fig.1
- Fig. 3: den Schnitt B-B aus Fig. 2;
- Fig. 4: den Schnitt C-C aus Fig. 3 und
- Fig. 5: ein Diagramm, bei dem die dynamische Federrate der in den Fig. 1 bis 4 gezeigten Hülsengummifeder über der Frequenz aufgetragen ist.
- Fig. 6: eine weitere Ausgestaltung der zweiten Ausgleichs kammer;
- Fig. 7: eine von Fig. 6 abweichende Ausführung der zweiten Ausgleichskammer;
- Fig. 8: den Schnitt D-D aus Fig. 9, wobei die Hülsengummi feder als Zweikammerlager ausgebildet ist;
- Fig. 9: den Schnitt E-E aus Fig. 8.

### Ausführung der Erfindung

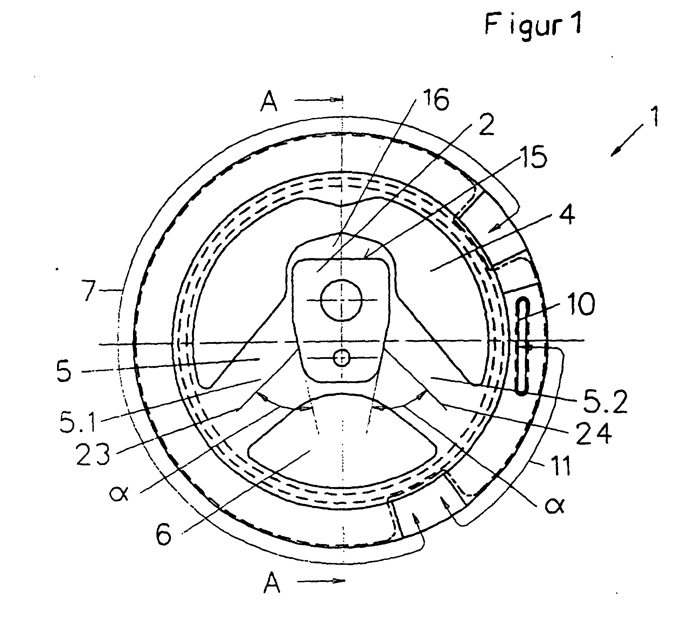

In den Fig. 1 bis 4 ist ein Ausführungsbeispiel einer Hülsengummifeder 1 gezeigt, die als Einkammerlager ausgebildet ist, und aus nur zwei miteinander zu montierenden Teilen besteht. Eines der Teile ist durch den äußeren Stützkörper 3 gebildet, während das andere Teil durch eine Einheit 22 gebildet ist, die aus dem Federkörper 5, Blähwand 9, den Begrenzungswänden 12 und dem Anschlagpuffer 6 besteht sowie aus dem Fensterrohr 21. Der Federkörper 5, die Blähwand 9, die Begrenzungswände 12 und der Anschlagpuffer 16 bestehen aus einem übereinstimmenden elastomeren Werkstoff und sind einstückig ineinander übergehend ausgebildet.

Der äußere Stützkörper 3 und der Federkörper 5 begrenzen eine mit Dämpfungsflüssigkeit gefüllte Arbeitskammer 6, die durch zumindest einen Dämpfungskanal 7 flüssigkeitsleitend mit zumindest einer ebenfalls mit Dämpfungsflüssigkeit gefüllten, im wesentlichen drucklos Volumen aufnehmenden ersten Ausgleichskammer 8 verbunden ist. Die erste Ausgleichskammer 8 erstreckt sich entlang der Innenumfangsfläche des äußeren Stützkörpers 3 und ist durch den äußeren Stützkörper 3 in radialer Richtung außen und durch die gummielastische Blähwand 9 in radialer Richtung innen begrenzt. Innerhalb der ersten Ausgleichskammer 8 ist eine zweite Ausgleichskammer 10 angeordnet, die durch den Verbindungskanal 11 mit der Arbeitskammer 6 verbunden ist.

In Fig. 1 ist die unterschiedliche Länge von Dämpfungskanal 7 und Verbindungskanal 11 schematisch gezeigt. Der Dämpfungskanal 7 weist in diesem Beispiel eine deutlich größere Länge und einen deutlich größeren Durchtrittsquerschnitt auf, als der Verbindungskanal 11. Die erste Ausgleichskammer 8 besteht in diesem Ausführungsbeispiel aus zwei Teilkammern 8.1, 8.2, wobei der Dämpfungskanal 7 eine Länge aufweist, die dem dreiviertel Umfang der Hülsengummifeder entspricht und dessen Mündungen einerseits in die Arbeitskammer 6 und andererseits in die zweiten Teilkammer 8.2 mündet.

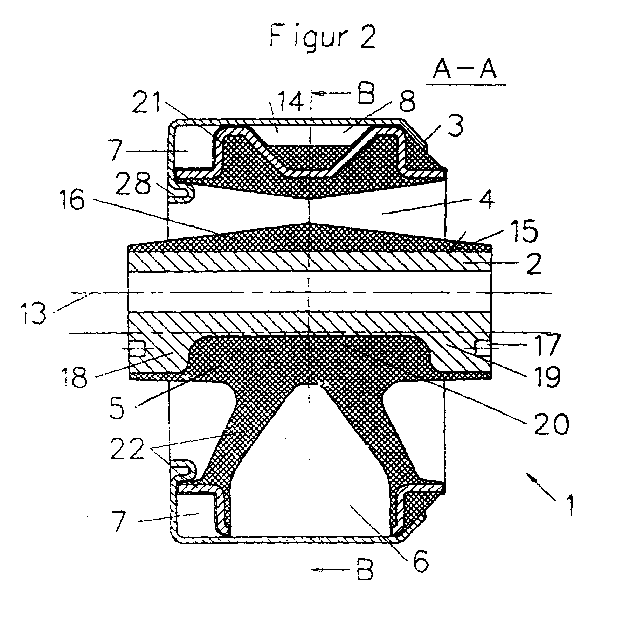

In Fig. 2 ist ein Längsschnitt durch die Hülsengummifeder aus Fig. 1 entlang der Linie A-A gezeigt. In dieser Fig. ist der Dämpfungskanal 7 gezeigt, der sich in Umfangsrichtung um die Hülsengummifeder 1 erstreckt, in die Arbeitskammer 6 mündet und durch den äußeren Stützkörper 3 und das Fensterrohr 21 begrenzt ist. Die Ausgestaltung des inneren Stützkörpers 2 ist gut zu erkennen. Der innere Stützkörper 2 ist außenumfangsseitig vollständig vom elastomeren Werkstoff des Federkörpers umschlossen und weist auf der der Arbeitskammer 6 abgewandten Seite einen Anschlagpuffer 16 auf, zur Begrenzung extremer Relativverlagerungen des inneren Stützkörpers 2 bezogen auf den äußeren Stützkörper 3.

Der innere Stützkörper 2 besteht in diesem Ausführungsbeispiel aus einem metallischen Werkstoff und weist im Bereich seiner beiden Stirnseiten in axialer Richtung offene Verdrehsicherungen 17 auf, die als Sackloch-Bohrungen ausgebildet sind. Die Verdrehsicherungen 17 sind innerhalb von Radialvorsprüngen 18, 19 angeordnet, die sich in Richtung der Arbeitskammer 6 erstrecken, wobei sich die Ausnehmung 20 des inneren Stützkörpers 2 in axialer Richtung zwischen den Radialvorsprüngen 18, 19 erstreckt. Durch diese Ausgestaltung wird eine größere Nachgiebigkeit der Hülsengummifeder in Richtung senkrecht zur Zeichnungsebene bewirkt.

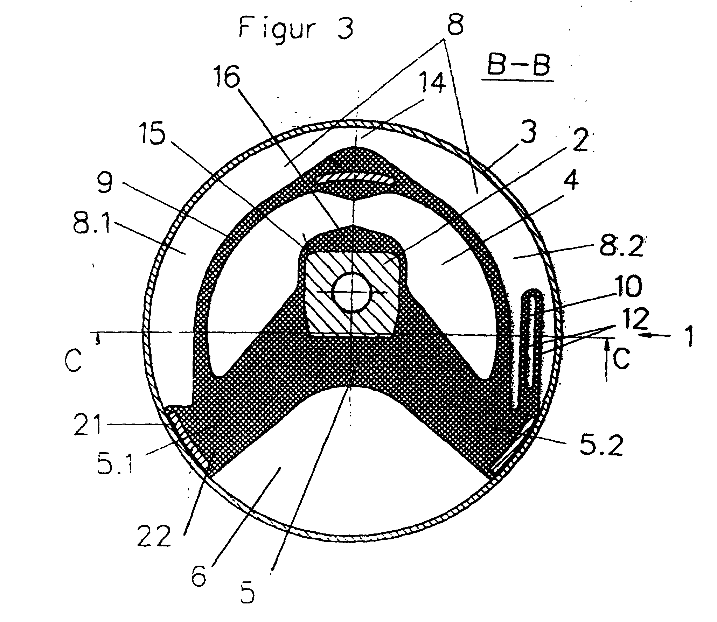

In Fig. 3 ist der Schnitt B-B aus Fig. 2 gezeigt. Es ist zu erkennen, daß die in der ersten Ausgleichskammer 8 angeordnete zweite Ausgleichskammer 10 einen im wesentlichen nierenförmigen Querschnitt aufweist und sich in Umfangsrichtung der Hülsengummifeder 1 erstreckt. Die zweite Ausgleichskammer 10 ist allseitig durch membranartige, blähfähige Begrenzungswände 12 aus gummielastischem Werkstoff begrenzt. Die zweite Ausgleichskammer 10 ist derart innerhalb der mit Dämpfungsflüssigkeit gefüllten ersten Ausgleichskammer 8 angeordnet, daß deren Begrenzungswände 12 in radialer Richtung mit Abstand benachbart zum äußeren Stützkörper 3 und zur Blähwand 9 der ersten Ausgleichskammer 8 angeordnet sind.

Die erste Ausgleichskammer 8 ist in diesem Beispiel durch zwei Teilkammern 8.1, 8.2 gebildet, die durch eine sich in Umfangsrichtung ersteckende Drosselöffnung 14 miteinander verbunden sind.

Der innere Stützkörper 2 weist einen trapezförmigen Querschnitt auf, wobei die Berührungsflächen mit jeweils einer gedachten Ebene 23, 24, die die Stützstege 5.1, 5.2 mittig durchschneiden einen Winkel α begrenzen, der in diesem Ausführungsbeispiel 65° beträgt.

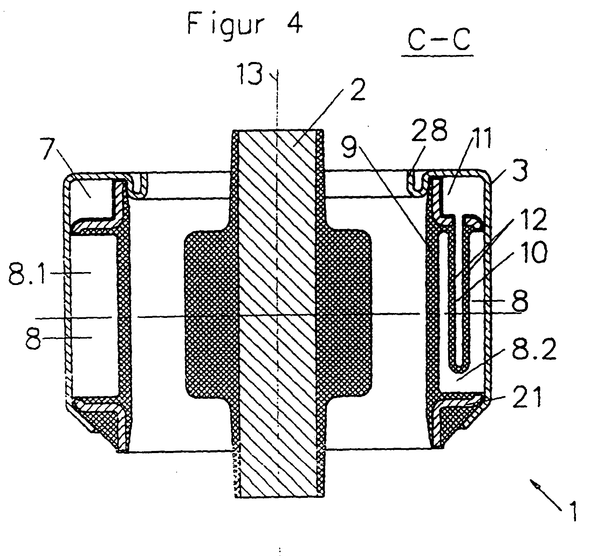

In Fig. 4 ist der Schnitt C-C aus Fig. 3 gezeigt. Die zweite Ausgleichskammer 10 erstreckt sich parallel zur Längsachse 13 der Hülsengummifeder 1, ist taschenförmig ausgebildet, wobei das Verhältnis aus der axialen Tiefe der ersten Ausgleichskammer 8 zur axialen Tiefe der zweiten Ausgleichskammer 10 höchsten zwei betragen sollte. In diesem Beispiel beträgt das Verhältnis 1,2. Der äußere Stützkörper 3 ist radial innenseitig mit einem Endanschlag 28 versehen, der sich in Umfangsrichtung erstreckt und zur Begrenzung extremer Auslenkbewegungen des inneren Stützkörpers 2 bezogen auf den äußeren Stützkörper 3 in radialer Richtung mit dem inneren Stützkörper 2 in Berührung bringbar ist. Die Begrenzungswände 12 können auf den einander zugewandten Seiten oder auf den einander abgewandten Seiten mit Profilierungen versehen sein, um Anschlaggeräusche und/oder unerwünschte Überdehnungen des elastomeren Materials bei Berührungen der Begrenzungswände miteinander oder mit der angrenzenden Blähwand sowie dem äußeren Stützkörper zu vermeiden.

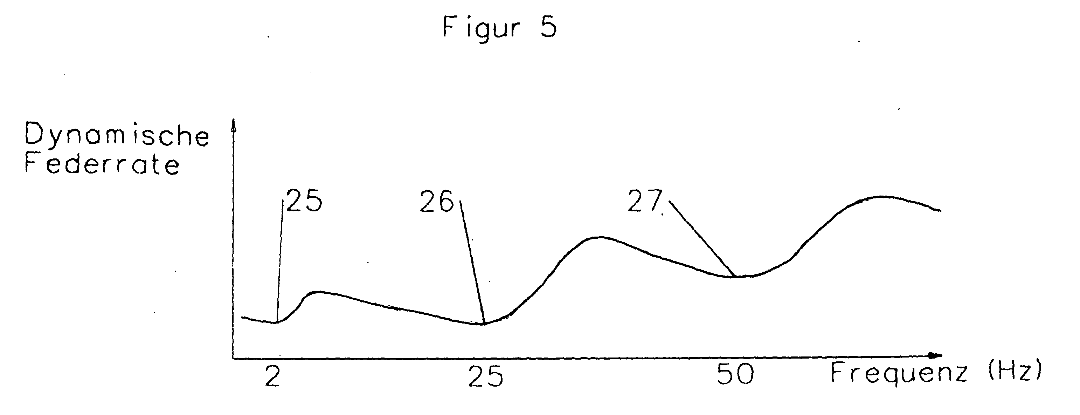

In Fig. 5 ist ein Diagramm dargestellt, bei dem die dynamische Federrate über der Frequenz für die in den Fig. 1 bis 4 dargestellten Hülsengummifeder 1 aufgetragen ist. Durch die beanspruchte Hülsengummifeder 1 kann die dynamische Federrate in drei Frequenzbereichen abgesenkt werden. Im ersten Frequenzbereich 25, um 4Hz erfolgt eine Absenkung der dynamischen Federrate durch die Flüssigkeitsverlagerung von der Arbeitskammer 6 durch den Dämpfungskanal 7 in die zweite Teilkammer 8.2 der ersten Ausgleichskammer 8. Die zweite Absenkung 26 erfolgt im Bereich von 25Hz dadurch, daß Flüssigkeitsbestandteile in der zweiten Ausgleichskammer 10 zu Schwingungen angeregt werden. Die dritte Absenkung 27 der dynamischen Federrate erfolgt im Bereich um 50Hz und wird dadurch erzielt, daß eine Schwingung der Flüssigkeitssäule zwischen den beiden Teilkammern 8.1, 8.2 in der Drosselöffnung 14 erfolgt.

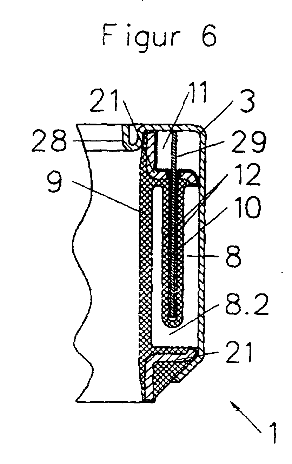

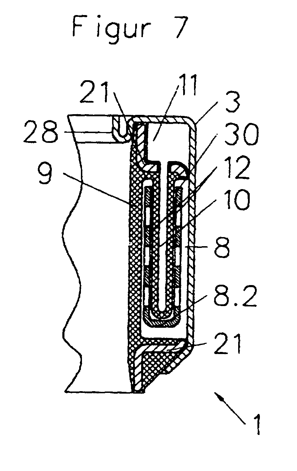

In den Fig. 6 und 7 sind weitere Ausführungsbeispiele der zweiten Ausgleichskammer 10 gezeigt. In Fig. 6 sind die Begrenzungswände auf den einander zugewandten Seiten durch ein erstes Formteil 29 voneinander getrennt. Das Formteil 29 kann beispielsweise aus einem zähharten polymeren Werkstoff bestehen und verhindert eine Anschlagberührung der Begrenzungswände 12, falls innerhalb der zweiten Ausgleichskammer 10 ein Unterdruck auftritt.

In Fig 7 ist ein zweites Formteil 30 gezeigt, das die Begrenzungswände 12 der zweiten Ausgleichskammer 10 außenseitig klammerartig umschließt. Hierdurch wird verhindert, daß eine überdruckbedingte Überdehnung des Werkstoffs aus dem die Begrenzungswände 12 bestehen, zu einer Beschädigung der Hülsengummifeder 1 führt. Ferner kann durch das zweite Formteil 30 die Federcharakteristik der Hülsengummifeder 1 zusätzlich an die jeweiligen Gegebenheiten des Anwendungsfalles angepaßt werden.

Die Hülsengummifeder 1 ist in den Fig. 1 bis 4 als Einkammerlager ausgebildet.

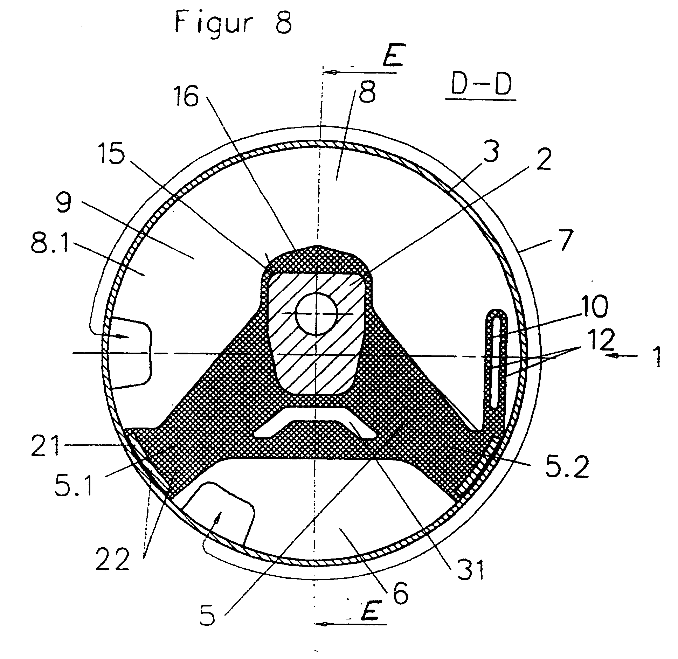

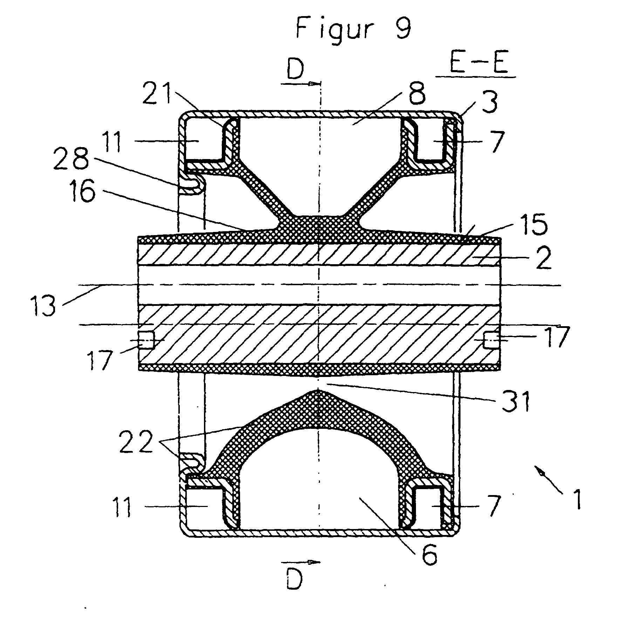

In den Fig. 8 und 9 ist eine Hülsengummifeder 1 gezeigt, die als Zweikammerlager ausgebildet ist. Die erste Ausgleichskammer 8 bildet neben der ersten Arbeitskammer 6 die zweite Kammer und ist durch den äußeren Stützkörper 3 und den Federkörper 5 begrenzt. Zwischen den Stützstegen 5.1, 5.2 ist, in radialer Richtung unterhalb des inneren Stützkörpers 2, eine Durchdringung 31 vorgesehen, die sich parallel zur Längsachse 13 der Hülsengummifeder 1 erstreckt. Der Dämpfungskanal 7 erstreckt sich in diesem Beispiel nahezu über den gesamten Umfang der Hülsengummifeder 1 von der Arbeitskammer 6 in die erste Ausgleichskammer 8.

In Fig. 9 ist der Schnitt E-E aus Fig. 8 gezeigt. Sowohl der Verbindungskanal 11 als auch der Dämpfungskanal 7 erstrecken sich nahezu über den gesamten Umfang der Hülsengummifeder 1, wobei zur Bildung des Dämpfungskanals 7 das Fensterrohr 21 im Bereich einer der stirnseitigen Begrenzungen der Hülsengummifeder 1 eine radial nach außen offene, im wesentlichen U-förmige Nut begrenzt. Der Verbindungskanal 11 ist auf der in axialer Richtung gegenüberliegenden Stirnseite der Hülsengummifeder 1 vorgesehen.

Die erfindungsgemäße Hülsengummifeder aus den Fig. 1 bis 4 sowie 8 und 9 sind jeweils im herstellungsbedingten, statisch nicht belasteten Zustand gezeigt.

## Patentansprüche

1. Hydraulisch dämpfende Hülsengummifeder mit einem inneren Stützkörper, der von einem äußeren Stützkörper mit radialem Abstand umschlossen ist, wobei in dem durch den Abstand gebildeten Spalt ein Federkörper aus elastomerem Werkstoff angeordnet ist, wobei der äußere Stützkörper und der Federkörper zumindest eine Arbeitskammer begrenzen, die durch zumindest einen Dämpfungskanal flüssigkeitsleitend mit zumindest einer ersten Ausgleichskammer verbunden ist, **dadurch gekennzeichnet, daß** die erste Ausgleichskammer (8) im Querschnitt betrachtet durch den äuβeren Stützkörper (3) und eine gummielastische Blähwand (9) begrenzt ist und daß in der ersten Ausgleichskammer (8) zumindest eine zweite Ausgleichskammer (10) angeordnet ist, die durch einen dämpfwirksamen Verbindungskanal (11) mit der Arbeitskammer (6) verbunden ist.

2. Hülsengummifeder nach Anspruch 1, **dadurch gekennzeichnet, daß** die zweite Ausgleichskammer (10) einen im wesentlichen nierenförmigen Querschnitt aufweist und sich in Umfangsrichtung der Hülsengummifeder (1) erstreckt und allseitig durch membranartige Begrenzungswände (12) aus gummielastischem Werkstoff begrenzt ist und daß die Begrenzungswände (12) dem äußeren Stützkörper (3) und der Blähwand (9) jeweils mit radialem Abstand benachbart zugeordnet sind.

3. Hülsengummifeder nach einem der Ansprüche 1 bis 2, **dadurch gekennzeichnet, daß** die zweite Ausgleichskammer (10) in axialer Richtung taschenförmig ausgebildet ist und sich parallel zur Längsachse (13) der Hülsengummifeder (1) in die erste Ausgleichskammer (8) erstreckt.

4. Hülsengummifeder nach einem der Ansprüche 1 bis 3, **dadurch gekennzeichnet, daß** der Federkörper (5), die Blähwand (9) und die Begrenzungswand (12) einstückig ineinander übergehend und materialeinheitlich ausgebildet sind.

5. Hülsengummifeder nach einem der Ansprüche 1 bis 4, **dadurch gekennzeichnet, daß** drei zweite Ausgleichskammern (10) innerhalb der ersten Ausgleichskammer (8) gleichmäßig in Umfangsrichtung verteilt angeordnet sind.

6. Hülsengummifeder nach Anspruch 5, **dadurch gekennzeichnet, daß** die zweiten Ausgleichskammern (10.1, 10.2, 10.3) mit Begrenzungswänden (12) voneinander abweichender Blähelastizität ausgebildet sind und/oder voneinander abweichende Volumina aufweisen.

7. Hülsengummifeder nach einem der Ansprüche 1 bis 6, **dadurch gekennzeichnet, daß** die erste Ausgleichskammer (8) aus zumindest zwei Teilkammern (8.1, 8.2) besteht die durch eine Drosselöffnung (14) flüssigkeitsleitend verbunden sind.

8. Hülsengummifeder nach einem der Ansprüche 1 bis 7, **dadurch gekennzeichnet, daß** die Arbeitskammer (6) einen im wesentlichen trapezförmigen Querschnitt aufweist.

9. Hülsengummifeder nach einem der Ansprüche 1 bis 8, **dadurch gekennzeichnet, daß** der innere Stützkörper (2) umfangsseitig vom Federkörper (5) vollständig umschlossen ist.

10. Hülsengummifeder nach einem der Ansprüche 1 bis 9, **dadurch gekennzeichnet, daß** der innere Stützkörper (2) einen im wesentlichen trapezförmigen Querschnitt aufweist, derart, daß die Stützstege (5.1, 5.2) des Federkörpers (5) die Umfangsfläche (15) des inneren Stützkörpers (2) in einem Winkel α von 45 bis 90° berühren.

11. Hülsengummifeder nach einem der Ansprüche 1 bis 10, **dadurch gekennzeichnet, daß** der innere Stützkörper (2) auf der der Arbeitskammer (6) abgewandten Seite einen einstückig mit dem Federkörper (5) ausgebildeten Anschlagpuffer (16) aufweist.

12. Hülsengummifeder nach einem der Ansprüche 1 bis 11, **dadurch gekennzeichnet, daß** der innere Stützkörper (2) stirnseitig zumindest einerseits in axialer Richtung eine Verdrehsicherung (17) aufweist.

13. Hülsengummifeder nach Anspruch 12, **dadurch gekennzeichnet, daß** die Verdrehsicherungen (17) in sich radial in Richtung der Arbeitskammer (6) erstreckenden Radialvorsprüngen (18, 19) angeordnet sind und daß in axialer Richtung zwischen den Radialvorsprüngen (18, 19) eine sich parallel zur Längsachse (13) der Hülsengummifeder (1) erstreckende Ausnehmung (20) vorgesehen ist.

14. Hülsengummifeder nach einem der Ansprüche 1 bis 13, **dadurch gekennzeichnet, daß** der Federkörper (5) und ein Fensterrohr (21) aus zähhartem Werkstoff eine Einheit (22) bilden und durch Vulkanisation miteinander verbunden sind.

## Claims

1. A hydraulically damping sleeve-type rubber spring, with an inner supporting body which is surrounded with radial clearance by an outer supporting body, a spring body made of elastomeric material being arranged in the gap formed by the clearance, the outer supporting body and the spring body delimiting at least one working chamber which is connected to at least one first compensating chamber in a fluid-conducting manner by means of at least one damping duct, **characterized in that**, as seen in cross-section, the first compensating chamber (8) is delimited by the outer supporting body (3) and an elastomeric expanding wall (9), and **in that** the first compensating chamber (8) has arranged in it at least one second compensating chamber (10) which is connected to the working chamber (6) by means of a connecting duct (11) having a damping effect.

2. A sleeve-type rubber spring according to Claim 1, **characterized in that** the second compensating chamber (10) has an essentially kidney-shaped cross section, extends in the circumferential direction of the sleeve-type rubber spring (1) and is delimited on all sides by diaphragm-like delimiting walls (12) made of elastomeric material, and **in that** the delimiting walls (12) are assigned to the outer supporting body (3) and to the expanding wall (9) in each case so as to be adjacent to these with radial clearance.

3. A sleeve-type rubber spring according to either one of claims 1 and 2, **characterized in that** the second compensating chamber (10) is designed to be pocket-shaped in the axial direction and extends parallel to the longitudinal axis (13) of the sleeve-type rubber spring (1) into the first compensating chamber (8).

4. A sleeve-type rubber spring according to any- one- of Claims 1 to 3, **characterized in**. that the spring body (5), the expanding wall (9) and the delimiting wall (12) are formed so as to merge one into the other in one piece in a materially integral manner.

5. A sleeve-type rubber spring according to any one of Claims 1 to 4, **characterized in that** three second compensating chambers (10) are arranged within the first compensating chamber (8) so as to be distributed uniformly in the circumferential direction.

6. A sleeve-type rubber spring according to claim 5, **characterized in that** the second compensating chambers (10.1, 10.2, 10.3) are designed with delimiting walls (12) having an expanding elasticity differing from one another and/or have volumes differing from one another.

7. A sleeve-type rubber spring according to any one of claims 1 to 6, **characterized in that** the first compensating chamber (8) is composed of at least two part-chambers (8.1, 8.2) which are connected in a fluid-conducting manner by means of a throttle orifice (14).

8. A sleeve-type rubber spring according to any one of claims 1 to 7, **characterized in that** the working chamber (6) has an essentially trapezoidal cross section.

9. Sleeve-type rubber spring according to any one of claims 1 to 8, **characterized in that** the inner supporting body (2) is completely surrounded circumferentially by the spring body (5).

10. A sleeve-type rubber spring according to any one of claims 1 to 9, **characterized in that** the inner supporting body (2) has an essentially trapezoidal cross section such that the supporting webs (5.1, 5.2) of the spring body (5) have contact with the circumferential surface (15) of the inner supporting body (2) at an angle α of 45 to 90°.

11. A sleeve-type rubber spring according to any one of claims 1 to 10, **characterized in that** the inner supporting body (2) has, on the side facing away from the working chamber (6), a stop buffer (16) formed in one piece with the spring body (5).

12. A sleeve-type rubber spring according to any one of claims 1 to 11, **characterized in that** the inner supporting body (2) has a twist prevention device (17) on the end face, at least on one side, in the axial direction.

13. A sleeve-type rubber spring according to claim 12, **characterized in that** the twist prevention devices (17) are arranged in radial projections (18, 19) extending radially in the direction of the working chamber (6), and **in that** a recess (20) extending parallel to the longitudinal axis (13) of the sleeve-type rubber spring (1) is provided in the axial direction between the radial projections (18, 19).

14. A sleeve-type rubber spring according to any one of claims 1 to 13, **characterized in that** the spring body (5) and an aperture tube (21) made of high-viscosity material form a unit (22) and are connected to one another by vulcanisation.

## Revendications

1. Ressort en caoutchouc de manchon à amortissement hydraulique avec un corps d'appui interne qui est entouré d'un corps d'appui externe avec écartement radial, un corps élastique en matière élastomère étant disposé dans la fente formée par l'écartement, le corps d'appui externe et le corps élastique limitant au moins une chambre de travail qui est reliée par au moins un canal d'amortissement de manière à permettre l'écoulement du liquide à au moins une première chambre de compensation, **caractérisé en ce que** la première chambre de compensation (8), vue en section transversale, est limitée par le corps d'appui externe (3) et une paroi gonflée élastomère (9) et **en ce que** dans la première chambre de compensation (8) est disposée au moins une deuxième chambre de compensation (10) qui est reliée par un canal de jonction efficace au niveau amortissement (11) à la chambre de travail (6).

2. Ressort en caoutchouc de manchon selon la revendication 1, **caractérisé en ce que** la deuxième chambre de compensation (10) présente une section transversale essentiellement réniforme et s'étend dans le sens circonférentiel du ressort en caoutchouc (1) et est limité de tous côtés par des parois de limitation du type membrane (12) en matière élastomère et **en ce que** les parois de limitation (12) sont associées de façon contiguë au corps d'appui externe (3) et à la paroi gonflée (9) à chaque fois avec un écartement radial.

3. Ressort en caoutchouc de manchon selon l'une des revendications 1 à 2, **caractérisé en ce que** la deuxième chambre de compensation (10) est conçue en forme de poche dans le sens axial et s'étend parallèlement à l'axe longitudinal (13) du ressort en caoutchouc de manchon (1) dans la première chambre de compensation (8).

4. Ressort en caoutchouc de manchon selon l'une des revendications 1 à 3, **caractérisé en ce que** le corps élastique (5), la paroi gonflée (9) et la paroi de limitation (12) sont conçus en une seule pièce en passant les uns dans les autres et en une seule unité de matière.

5. Ressort en caoutchouc de manchon selon l'une des revendications 1 à 4, **caractérisé en ce que** trois deuxièmes chambres de compensation (10) sont disposées en étant réparties dans le sens circonférentiel de façon uniforme à l'intérieur de la première chambre de compensation (8).

6. Ressort en caoutchouc de manchon selon la revendication 5, **caractérisé en ce que** les deuxièmes chambres de compensation (10.1, 10.2, 10.3) sont conçues avec des parois de limitation (12) d'une élasticité de gonflage différente l'une de l'autre et /ou présentent des volumes différents l'un de l'autre.

7. Ressort en caoutchouc de manchon selon l'une des revendications 1 à 6, **caractérisé en ce que** la première chambre de compensation (8) se compose d'au moins deux chambres partielles (8.1, 8.2) qui sont reliées de manière à permettre l'écoulement du liquide par une ouverture d'étranglement (14).

8. Ressort en caoutchouc de manchon selon l'une des revendications 1 à 7, **caractérisé en ce que** la chambre de travail (6) présente une section transversale essentiellement en forme de trapèze.

9. Ressort en caoutchouc de manchon selon l'une des revendications 1 à 8, **caractérisé en ce que** le corps d'appui interne (2) est totalement entouré du côté circonférentiel par le corps élastique (5).

10. Ressort en caoutchouc de manchon selon l'une des revendications 1 à 9, **caractérisé en ce que** le corps d'appui interne (2) présente une section transversale essentiellement en forme de trapèze de telle sorte que les entretoises d'appui (5.1, 5.2) du corps élastique (5) touchent la surface circonférentielle (15) du corps d'appui interne (2) selon un angle α de 45 à 90°.

11. Ressort en caoutchouc de manchon selon l'une des revendications 1 à 10, **caractérisé en ce que** le corps d'appui interne (2) présente sur le côté non tourné vers la chambre de travail (6) un tampon de butée (16) conçu d'une seule pièce avec le corps élastique (5).

12. Ressort en caoutchouc de manchon selon l'une des revendications 1 à 11, **caractérisé en ce que** le corps d'appui interne (2) présente du côté frontal au moins d'un côté dans le sens axial un système anti-rotation (17).

13. Ressort en caoutchouc de manchon selon la revendication 12, **caractérisé en ce que** les systèmes anti-rotation (17) sont disposés dans des saillies radiales (18, 19) s'étendant radialement dans le sens de la chambre de travail (6) et **en ce qu'**est prévu dans le sens axial entre les saillies radiales (18, 19) un évidement (20) qui s'étend parallèlement à l'axe longitudinal (13) du ressort en caoutchouc de manchon (1).

14. Ressort en caoutchouc de manchon selon l'une des revendications 1 à 13, **caractérisé en ce que** le corps élastique (5) et un tube de fenêtre (21) en matière dure tenace forment une unité (22) et sont reliés ensemble par vulcanisation.
